(19) Europäisches Patentamt / European Patent Office / Office européen des brevets

(11) **EP 2 261 817 A1**

(12) **DEMANDE DE BREVET EUROPEEN**

(43) Date de publication:
**15.12.2010 Bulletin 2010/50**

(51) Int Cl.:
***G06F 17/13*** *(2006.01)*

(21) Numéro de dépôt: **09290431.7**

(22) Date de dépôt: **11.06.2009**

(84) Etats contractants désignés:
**AT BE BG CH CY CZ DE DK EE ES FI FR GB GR HR HU IE IS IT LI LT LU LV MC MK MT NL NO PL PT RO SE SI SK TR**
Etats d'extension désignés:
**AL BA RS**

(71) Demandeur: **Nuadi, Richard**
**78000 Versailles (FR)**

(72) Inventeur: **Nuadi, Richard**
**78000 Versailles (FR)**

(74) Mandataire: **de Saint-Palais, Arnaud Marie**
**Cabinet Moutard**
**35 Rue de la Paroisse**
**B.P. 20513**
**78005 Versailles Cedex (FR)**

(54) **Procédé d'analyse du comportement d'un système dynamique dissipatif**

(57)    L'invention porte sur un procédé d'analyse du comportement asymptotique d'un système dynamique et dissipatif comportant les étapes suivantes :
- établir le système d'équations,
- déterminer un jeu de conditions initiales proches $CI_j$, j variant de 1 à n,
- pour chaque condition initiale $CI_j$ :
• résoudre le système d'équations par pas de temps $T_i$, i variant de 1 à h,
• à chaque pas de temps, calculer le coefficient de Lyapunov $L_{i,j}$.

L'invention porte également sur un produit-programme informatique comportant des sections de code de programme pour mettre en oeuvre le procédé lorsque le programme est exécuté sur un ordinateur de bureautique, un dispositif à base de processeur, un dispositif à base de microprocesseur, un terminal, un dispositif de réseau, un terminal mobile ou sur un terminal apte à fournir une communication mobile.

Figure 1

**Description**

L'invention se situe dans le domaine des procédés d'aide à la décision concernant des systèmes complexes. Elle concerne un procédé d'analyse du comportement asymptotique d'un système dynamique dissipatif.

L'étude d'un phénomène physique, économique, biologique, météorologique ou écologique nécessite l'introduction de lois probabilistes, d'équations intégrales, d'équations différentielles ou d'équations aux dérivées partielles traduisant les propriétés (mouvement, concentration...) des espèces en présence. L'ensemble des équations obtenues représente la dynamique du phénomène et sa résolution mathématique donne des informations sur le comportement futur du phénomène physique à moyen ou long terme.

Un système d'équations classique traduit le comportement du milieu étudié seul, par exemple les équations de Navier - Stokes pour un fluide incompressible :

$$\begin{cases} div\ u = 0 & \text{dans } Q \\ \rho_0\left(\frac{\partial u(t,x)}{\partial t} + (u(t,x)\cdot\nabla)u(t,x)\right) - \nu\Delta u(t,x) + \nabla p(t,x) = f(t,x) & \text{dans } Q \\ u(0,x) = u_0(x), \quad \text{dans } Q, \ u = 0 \ \text{sur } \Gamma \end{cases}$$

Dans cette équation, *v* est une constante (positive) de diffusion, *u* et *p* désignent respectivement la vitesse et la pression d'un fluide visqueux incompressible.

Un système d'équations plus complet rend compte de l'ensemble des phénomènes physiques, c'est à dire y compris de perturbations apportées au milieu, ou du comportement de composants qui interagissent entre eux et/ou avec le milieu, par exemple dans le cas de l'atmosphère des réactions de type physico-chimiques (oxydation, hydrogénation) ou, dans le mode économique, une variation d'un cours de change suivant le prix du baril de pétrole, que l'on appellera « réactions instantanées ».

La modélisation mathématique de la situation physique se fait comme suit.

Soit un ouvert borné $\Omega$ de $R^2$ de frontière $\Gamma$ localement lipschitienne et posons :

$$Q =]0,T[\times\Omega, \ \Gamma = \Gamma_1 \cup \Gamma_2 \cup \Gamma_3, \ mes(\Gamma_1) > 0$$

On considère $\psi_1$ et $\psi_2$ deux fonctions régulières telles que,

$$\psi_1 \leq 0 \leq \psi_2 \ pp \ \Omega$$

On pose, $K(x) = [\psi_1(x), \psi_2(x)]$, et on désigne par $\psi_K(x)$ la fonction indicatrice de $K(x)$.

On pose,

$$\mathcal{K}(x) = \{v\epsilon L^2(\Omega); v(x)\epsilon K(x) \ pp \ \text{dans } K(x)$$

alors $K$ est un convexe fermé borné de $L^2(\Omega)$ et dépendant de $\psi_1(x)$ et $\psi_2(x)$. La modélisation est traduite par le système suivant :

$$u_0, \Theta_0 \epsilon (L^2(\Omega))^2; c_{1,0}, \ c_{2,0}, \ c_{3,0} \epsilon K; \ f,h,g_1,g_2,g_3 \epsilon L^2(0,T; L^2(\Omega))$$

$$\begin{cases} c_1(t,x), c_2(t,x), c_3(t,x) \in K(x) \;\; pp \;\; \text{dans} \;\; \Omega, \qquad div \; u = 0 \hspace{3cm} \text{dans} \; Q \\[2mm] \frac{\partial}{\partial t}u(t,x) - \nu\Delta u(t,x) + \sum_{i=1}^{2} u_i(t,x)\frac{\partial}{\partial x_i}u(t,x) + \nabla p(t,x) = \\ (0, f(t,x) + \alpha_1 c_1(t,x)) + \alpha_2 c_2(t,x)) + \alpha_3 c_3(t,x)) \hspace{2cm} pp \;\; \text{dans} \; Q \\[2mm] \frac{\partial}{\partial t}c_1(t,x) - \mu_1\Delta c_1(t,x) + \sum_{i=1}^{2} u_i(t,x)\frac{\partial}{\partial x_i}c_1(t,x) = g_1(t,x) + \beta_1 c_2(t,x) + \beta_2 c_3(t,x) \hspace{0.5cm} \text{dans} \; Q \\[2mm] \frac{\partial}{\partial t}c_2(t,x) - \mu_2\Delta c_2(t,x) + \sum_{i=1}^{2} u_i(t,x)\frac{\partial}{\partial x_i}c_2(t,x) = g_2(t,x) + \gamma_1 c_3(t,x) \hspace{1.5cm} \text{dans} \; Q \\[2mm] \frac{\partial}{\partial t}c_3(t,x) - \mu_3\Delta c_3(t,x) + \sum_{i=1}^{2} u_i(t,x)\frac{\partial}{\partial x_i}c_3(t,x) = g_3(t,x) \hspace{2.5cm} \text{dans} \; Q \\[2mm] \frac{\partial}{\partial t}\Theta - \delta\Delta\Theta + \sum_{i=1}^{2} u_i\frac{\partial}{\partial x_i}\Theta = h(t,x) \hspace{3.5cm} \text{dans} \; Q \\[2mm] u(0,x) = u_0(x), \quad \Theta(0,x) = \Theta_0(x) \hspace{4cm} \text{dans} \; \Omega \\[2mm] c_1(0,x) = c_{1,0}(x), \;\; c_2(0,x) = c_{2,0}(x), \;\; c_3(0,x) = c_{3,0}(x) \hspace{1.5cm} \text{dans} \; \Omega \\[2mm] u = 0 \;\; \text{sur} \; \Gamma, \;\; c_1 = c_2 = c_3 = 0 \;\; \text{sur} \; \Gamma_1, \\[2mm] \frac{\partial c_1}{\partial n} = \frac{\partial c_2}{\partial n} = \frac{\partial c_3}{\partial n} = 0, \;\; \text{sur} \; \Gamma\backslash\Gamma_1, \;\; \Theta = \Theta_1 \;\; \text{sur} \; \Gamma \end{cases}$$

Dans cette équation, $\nu, \mu_1, \mu_2$ et $\mu_3$ sont des constantes positives, $\alpha_i$, ($i = 1, ..., 3$), $\beta_i$ ($i = 1, 2$) et $\gamma_1$ sont des constantes $u, p$ désignent respectivement la vitesse et la pression d'un fluide visqueux incompressible, $c_1$, $c_2$ et $c_3$ désignent la concentration des espèces chimiques baignant dans le fluide.

On sait établir l'ensemble de ces équations. Ce qui est moins évident, c'est de prouver l'existence et l'unicité de la solution. Une fois cette étape franchie, des méthodes numériques connues de résolution permettent d'obtenir rigoureusement des solutions fiables. Cependant la résolution de ces systèmes est longue et coûteuse en temps de calcul. Seul un petit nombre de calculs peut être effectué par jour.

Par ailleurs, de tels systèmes peuvent être instables, c'est-à-dire qu'une faible variation des conditions initiales peut se traduire par des solutions très éloignées. On sait depuis les travaux de Henri Poincaré que la stabilité d'un système dynamique est une condition nécessaire pour prévoir de manière objective le comportement futur des trajectoires du système. Par contre l'instabilité limite les possibilités de prévisions. En conséquence la solution d'un système dynamique n'est pas suffisante pour qualifier les comportements futurs des trajectoires.

Les logiciels scientifiques de l'état de l'art tels que Matlab, Mathematica ou Scilab (marques enregistrées) fournissent la solution d'un système d'équations et réalisent des prévisions. Même si les calculs sont d'une grande précision, il n'en demeure pas moins que ces outils présentent des limites dans la prévision dynamique. Les principales limites sont les suivantes :

- ils n'intègrent pas de modèle. Un modèle peut être vu comme un ensemble de systèmes d'équations, de méthodes numériques et de processus informatiques rendant compte de l'état actuel et futur de toutes les variables explicatives d'un système dynamique ;
- la solution calculée n'est accompagnée d'aucune information sur la stabilité structurelle du système dynamique. C'est grâce à la stabilité structurelle que l'on peut savoir si la trajectoire calculée est stable ;
- une étude complète est segmentée en plusieurs tâches traitées séparément, ce qui allonge le temps de calcul ;
- ces logiciels nécessitent une formation préalable sur le langage de programmation intégré.

Il subsiste donc un besoin pour un outil d'aide à la décision qui permette de fournir rapidement la solution ainsi que des indicateurs sur la stabilité structurelle d'un système dynamique soumis à des « réactions instantanées », de façon à réaliser une prévision de son comportement, notamment en vue de rechercher un optimum.

Or le Demandeur, dans sa thèse « Etude d'un système d'équations aux dérivées partielles non linéaires de type Bénard avec contraintes », Université de Bordeaux 1, soutenue en septembre 1999 et publiée, a établi :

- que l'on pouvait regrouper dans une équation aux dérivées partielles comportant un opérateur sous-différentiel, équivalente à une équation multivoque, l'ensemble des équations traduisant les « réactions instantanées » ; le système devient alors par exemple :

$$
\left\{
\begin{array}{ll}
div\ u = 0 & \text{dans } Q \\[4pt]
\frac{\partial}{\partial t}u(t,x) - \nu\Delta u(t,x) + \sum_{i=1}^{2} u_i(t,x)\frac{\partial}{\partial x_i}u(t,x) + \nabla p(t,x) = (0, f(t,x) + \alpha c(t,x)) & \text{pp dans } Q \\[4pt]
\frac{\partial}{\partial t}c(t,x) - \mu\Delta c(t,x) + \sum_{i=1}^{2} u_i(t,x)\frac{\partial}{\partial x_i}c(t,x) + \partial\psi_{K(x)}c(t,x) \ni g(t,x) & \text{dans } Q \\[4pt]
\frac{\partial}{\partial t}\Theta - \delta\Delta\Theta + \sum_{i=1}^{2} u_i\frac{\partial}{\partial x_i}\Theta = h(t,x) & \text{dans } Q \\[4pt]
u(0,x) = u_0(x),\ c(0,x) = c_0(x),\ \Theta(0,x) = \Theta_0(x) & \text{dans } \Omega \\[4pt]
u = 0\ \text{sur } \Gamma,\ c = 0\ \text{ sur } \Gamma_1,\ \frac{\partial c}{\partial n} = 0\ \text{ sur } \Gamma\backslash\Gamma_1,\ \Theta = \Theta_1\ \text{ sur } \Gamma
\end{array}
\right.
$$

Dans cette équation,

$$\partial\psi_{K(x)}$$

est un opérateur dit de sous différentiel permettant d'écrire des équations multivoques.

- que ce système était équivalent à système comportant une inéquation aux dérivées partielles comme suit :

$$
\left\{
\begin{array}{ll}
div\ u = 0 & \text{dans } Q \\[4pt]
\frac{\partial}{\partial t}u(t,x) - \nu\Delta u(t,x) + \sum_{i=1}^{2} u_i(t,x)\frac{\partial}{\partial x_i}u(t,x) + \nabla p(t,x) = (0, f(t,x) + \alpha c(t,x)) & \text{pp dans } Q \\[4pt]
\left(\frac{\partial}{\partial t}c(t,x) - \mu\Delta c(t,x) + \sum_{i=1}^{2} u_i(t,x)\frac{\partial}{\partial x_i}c(t,x) - g(t,x)\right)(z - c(t,x)) \geq 0\ \ \forall z \epsilon K(x) & \text{pp dans } Q \\[4pt]
\frac{\partial}{\partial t}\Theta - \delta\Delta\Theta + \sum_{i=1}^{2} u_i\frac{\partial}{\partial x_i}\Theta = h(t,x) & \text{dans } Q \\[4pt]
u(0,x) = u_0(x),\ c(0,x) = c_0(x),\ \Theta(0,x) = \Theta_0(x) & \text{dans } \Omega \\[4pt]
u = 0\ \text{sur } \Gamma,\ c = 0\ \text{ sur } \Gamma_1,\ \frac{\partial c}{\partial n} = 0\ \text{ sur } \Gamma\backslash\Gamma_1,\ \Theta = \Theta_1\ \text{ sur } \Gamma
\end{array}
\right.
$$

- l'existence et l'unicité de la solution d'un système d'équations aux dérivées partielles comportant une telle inéquation.

Cette inéquation représente la « densité d'informations » dont l'on dispose sur les « réactions instantanées ».
En revanche, comme indiqué plus haut, les méthodes connues de résolution de systèmes d'équations ne savent pas résoudre un système comportant une telle inéquation.
A cette fin, l'invention propose un procédé d'analyse du comportement asymptotique d'un système dynamique et dissipatif comportant les étapes consistant à :

- établir le système d'équations,
- déterminer un jeu de conditions initiales proches $CI_j$, j variant de 1 à n,
- pour chaque condition initiale $CI_j$ :

    • résoudre le système d'équations par pas de temps $T_i$, i variant de 1 à h,
    • à chaque pas de temps, calculer le coefficient de Lyapunov $L_{i,j}$.

Le procédé est particulièrement adapté à l'analyse de systèmes soumis à des « réactions instantanées ».
Dans certains cas, on connaît les formes des équations du système mais on ne connaît pas la valeur numérique des coefficients (de diffusion, de convection, ou la force), qu'il faut au préalable calculer : il faut effectuer une calibration du système d'équations. A cet effet on utilise une série temporelle reflétant un état passé ou présent de la situation. Dans ce cas, le procédé comporte en outre l'étape préalable consistant à :

- procéder à une analyse d'au moins une série temporelle en vue de calibrer les coefficients des équations.

En résolvant le système avec différentes conditions initiales $CI_j$, j variant de 1 à n, on aboutit à un ensemble de solutions $S_{j,h}$ et on constitue les trajectoires correspondantes.

Dans une étape suivante, on étudie le comportement asymptotique du système, c'est à dire le comportement des trajectoires au delà de l'horizon temporel $T_h$, ce qui permet de fournir un premier renseignement sur le système : lorsque deux trajectoires initialement voisines divergent au cours du temps, on est en présence d'un système instable sur lequel il n'est pas possible de conduire une prévision et la solution calculée est sans perspective de prévisibilité à moyen terme.

En revanche, lorsque deux trajectoires initialement voisines convergent avec le temps vers un point ou un ensemble dit absorbant, on est en présence d'un système stable et l'ensemble absorbant est appelé « attracteur ». En revanche à ce stade on n'a aucun renseignement sur la nature de cet attracteur : attracteur point, un tore ou une bifurcation. On ne sait pas si la solution est optimale et le procédé comporte en outre l'étape consistant à :

- examiner si tous les coefficients de Lyapunov $L_{i,j}$ sont négatifs, auquel cas il y a convergence à partir d'un temps Tn (peut-être plus éloigné que l'horizon Th) et il est certain qu'il existe un unique attracteur pour le système dynamique, et donc qu'il est possible d'identifier une solution optimale,
- en revanche, un coefficient de Lyapunov $L_{i,j}$ positif traduit un risque d'instabilité du système, c'est-à-dire que des trajectoires initialement proches vont diverger, puis converger de nouveau vers un attracteur. Dans ce cas, la solution calculée peut ne pas être optimale et on calcule la dimension fractale $D_k$ de l'attracteur.

Si la dimension fractale de l'attracteur est comprise dans une fourchette, par exemple entre 1/2 et 3/2, on est certain qu'il existe un unique attracteur pour les solutions du système, et donc qu'il est possible d'identifier une solution optimale. Dans le cas contraire on ne peut rien dire et il est nécessaire de caractériser les régimes transitoires pour savoir à quel niveau on peut capturer une solution optimale. On calcule ainsi des coefficients de Hurst, par exemple sur chaque intervalle, pour identifier les tendances à court ou moyen terme.

L'invention porte également sur un produit-programme informatique comportant des sections de code de programme pour mettre en oeuvre le procédé lorsque ledit programme informatique est exécuté sur un ordinateur de bureautique, sur un dispositif à base de processeur, sur un dispositif à base de microprocesseur, sur un terminal, sur un dispositif de réseau, sur un terminal mobile ou sur un terminal apte à fournir une communication mobile.

Le programme informatique qui réalise les étapes ci-dessus s'exécute très rapidement sur un processeur d'ordinateur de bureau lorsqu'elles sont codées dans un langage objet tel que C++ ou VBA, y compris dans le cadre d'un tableur standard tel que Excel. Ceci permet de conduire plusieurs analyses au cours d'une même journée et donc d'obtenir des résultats en temps quasi-réel.

Les applications sont nombreuses ; citons notamment :

- le transport de masse et de chaleur dans l'atmosphère. L'application consiste alors à étudier le comportement d'un polluant dans une colonne d'air en présence d'autres constituants atmosphériques avec lesquelles il est susceptible de réagir, afin d'aider à définir les meilleures stratégies pour maîtriser ce composant. Les espèces chimiques présentes dans la zone entrent en interaction selon des lois physico-chimiques connues et ce processus instantané peut modifier, toutes choses égales par ailleurs, le devenir de certaines espèces. La modélisation selon l'état de l'art consiste à traduire en équations l'ensemble des processus physico-chimiques, en sus des mécanismes de transport de la concentration des espèces, puis à résoudre simultanément l'ensemble des systèmes d'équation aux dérivées partielles obtenues, chaque équation étant associée à des conditions initiales et à des conditions aux limites. On aboutit très vite à un grand nombre d'équations qui interagissent entre elles et dont la résolution simultanée est coûteuse en temps de calcul. De plus, la méthode classique de résolution ne rend pas compte de la stabilité du système et ne donne aucune information sur la prévisibilité à moyen et long terme de la solution calculée. Au contraire, selon l'invention, on regroupe en famille les espèces chimiques présentant un fort couplage par des conversions chimiques et photochimiques rapides. On modélise ainsi la concentration de la famille par un opérateur de sous différentiel, ce qui représente un gain de temps de calcul considérable. On étudie ensuite la structure dynamique des trajectoires pour détecter la présence d'un attracteur ou d'un chaos, ce qui permet de faire une prévision objective.
- l'étude des échanges gazeux entre l'alvéole (élément unitaire des poumons) et le capillaire sanguin, ou celle du fonctionnement du rein. Cette étude se fait de façon optimale par des équations paraboliques. Trois gaz sont pris en considération : l'oxygène, le gaz carbonique et l'azote. On assiste à trois phénomènes physiques : la diffusion, la convection et la diffusion de ces gaz dans le sang à travers la paroi alvéolaire. Le modèle prend en compte la pression des mêmes gaz dans le tube alvéolaire et dans le sang, les transformations physico-chimiques et le bilan de masse. Le mécanisme de transport de masse est modélisé par une équation de convection réaction-diffusion. Les réactions chimiques instantanées et l'évolution de la concentration des substances sont traduites par des inéquations aux dérivées partielles avec des conditions initiales et des conditions aux limites. Une fois la modélisation mathématique effectuée, le procédé permet d'établir une prévision dynamique à partir des mesures prises en continu.

- l'optimisation de la conversion d'une obligation convertible. C'est un produit financier présentant un risque de défaut et fonctionne de la même manière qu'une option américaine. Le détenteur a le droit de convertir l'obligation en un certain nombre d'actions de la société émettrice qui possède elle aussi, une option de remboursement anticipé. L'exercice de ces deux options se fait à certaines dates définies dans le contrat. Le problème est de connaître la date d'exercice optimale pour l'acheteur de l'option. La méthode traditionnelle consiste à résoudre le système d'équations traduisant la situation alors que dans un régime chaotique, la solution n'est pas forcément optimale. Selon l'invention, on modélise la valeur de l'obligation convertible par un générateur infinitésimal comportant un opérateur de sous différentiel. Cette modélisation introduit une inéquation aux dérivées partielles avec des conditions initiales et des conditions aux limites. Le cours de l'action est naturellement modélisé par une équation différentielle stochastique associée à des conditions initiales. A quelle date l'exercice de l'option est-il optimal pour l'acheteur ? La résolution du système formé d'équations et d'inéquations aux dérivées partielles fournit une solution. On réalise ensuite une étude asymptotique des trajectoires selon l'invention et l'existence d'un unique attracteur permet de confirmer l'optimalité de la solution.

Des modes d'exécution de l'invention seront décrits ci-après, à titre d'exemples non limitatifs, avec référence au dessin annexé dans lequel :

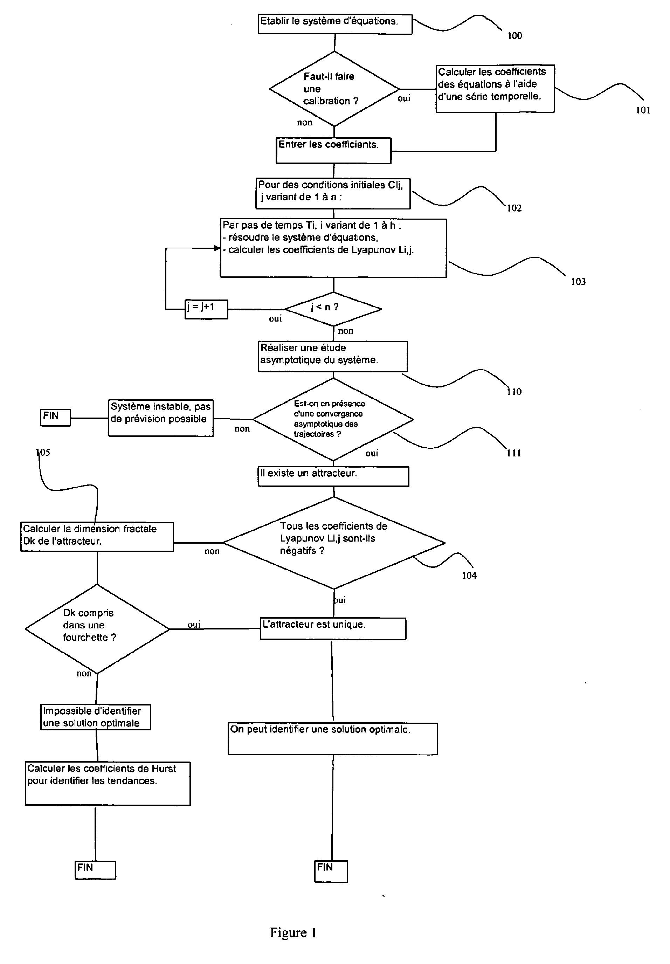

La figure 1 représente un organigramme simplifié pour l'exécution du procédé.

Dans le bloc 100, on établit le système d'équations caractérisant le comportement du système dynamique, y compris les « réactions instantanées ». Dans certains cas la forme des équations est connue mais pas les coefficients. Dans ce cas, dans le bloc 101, on utilise une série temporelle résultant de mesures ou d'expériences passées, pour calibrer le système. Pour conduire cette analyse, différentes méthodes sont disponibles, par exemple la méthode des splines, les fonctions polynômiales, le contrôle optimal, la méthode des moindres carrés ou, de façon préférée, l'analyse en composantes principales (ACP).

Si on a affaire à un système temps réel et qu'on ne dispose pas d'une série temporelle, on peut déterminer les coefficients par approximation successive en procédant périodiquement à l'analyse de la série temporelle depuis l'origine.

Dans le bloc 102, on établit un jeu de conditions initiales $CI_j$, j variant de 1 à n, en vue de tester la stabilité du système aux conditions initiales.

Dans le bloc 103, on résout le système d'équations selon une méthode connue, par exemple par différences finies, par pas de temps de $T_i$, i variant de 1 à h, $T_h$ étant un horizon temporel. A chaque pas de temps on calcule un coefficient de Lyapunov $L_{i,j}$.

La résolution des équations jusqu'à l'horizon temporel $T_h$ conduit à un ensemble de solutions $S_{h,j}$ différentes selon les conditions initiales $CI_j$ de départ.

Dans le bloc 110 on étudie le comportement asymptotique du système en calculant des solutions du système pour des horizons temporels au-delà de Th, par exemple $T_{h1}$, $T_{h2}$... et on établit les trajectoires correspondantes. Le nombre et l'espacement temporel de ces horizons temporels sont fonction du domaine étudié.

Dans le bloc 111 on examine si on est en présence d'une convergence asymptotique, en utilisant une norme connue, c'est à dire si les trajectoires restent proches entre elles et se rapprochent d'une limite asymptotique.

S'il existe une convergence asymptotique, on est en présence d'un système stable et il existe un attracteur des trajectoires.

Pour que la solution soit optimale, il faut que l'attracteur soit unique. On examine dans le bloc 104 si tous les coefficients de Lyapunov $L_{i,j}$ sont négatifs. Si c'est le cas, on est en présence d'un attracteur unique pour le système dynamique et on peut identifier une solution optimale. Dans le cas contraire, c'est-à-dire s'il existe au moins un coefficient positif, on n'est pas certain de l'unicité de l'attracteur ou du moins de sa nature, on peut être en présence d'un attracteur étrange. Dans le bloc 105 on poursuit l'analyse en calculant la dimension fractale $D_k$ de l'attracteur pour identifier sa nature. Si cette dimension fractale est comprise dans une fourchette, par exemple entre 1/2 et 3/2, c'est que l'attracteur est unique et on peut encore identifier une solution optimale.

Sinon il est impossible d'identifier de solution optimale. On ne peut qu'identifier une tendance à court ou moyen terme en calculant les coefficients de Hurst.

**Revendications**

1. Procédé d'analyse du comportement asymptotique d'un système dynamique et dissipatif,
   **caractérisé en ce qu'**il comporte les étapes suivantes :

   - établir le système d'équations,
   - déterminer un jeu de conditions initiales proches $CI_j$, j variant de 1 à n,
   - pour chaque condition initiale $CI_j$ :

     • résoudre le système d'équations par pas de temps $T_i$, i variant de 1 à h,
     • à chaque pas de temps, calculer le coefficient de Lyapunov $L_{i,j}$.

2. Procédé selon la revendication 1,
   **caractérisé en ce qu'**il comporte en outre l'étape préalable consistant à :

   - procéder à une analyse d'au moins une série temporelle en vue de calibrer les coefficients des équations.

3. Procédé selon la revendication 1 ou 2,
   **caractérisé en ce qu'**il comporte en outre l'étape consistant à :

   - étudier le comportement asymptotique du système.

4. Procédé selon la revendication 3,
   **caractérisé en ce qu'**il comporte en outre l'étape consistant à :

   - examiner si tous les coefficients de Lyapunov $L_{i,j}$ sont négatifs, et dans la négative :
   - calculer la dimension fractale $D_k$ de l'attracteur.

5. Procédé selon la revendication 3,
   **caractérisé en ce qu'**il comporte en outre l'étape consistant à :

   - calculer les coefficients de Hurst de façon à identifier les tendances à court ou moyen terme.

6. Produit-programme informatique comportant des sections de code de programme pour mettre en oeuvre le procédé selon l'une quelconque des revendications précédentes, lorsque ledit programme informatique est exécuté sur un ordinateur de bureautique, sur un dispositif à base de processeur, sur un dispositif à base de microprocesseur, sur un terminal, sur un dispositif de réseau, sur un terminal mobile ou sur un terminal apte à fournir une communication mobile.

Etablir le système d'équations. ———~ 100

Faut-il faire
une
calibration ?

oui → Calculer les coefficients
des équations à l'aide
d'une série temporelle. ———~ 101

non

Entrer les coefficients.

Pour des conditions initiales CIj,
j variant de 1 à n : ———~ 102

Par pas de temps Ti, i variant de 1 à h :
- résoudre le système d'équations,
- calculer les coefficients de Lyapunov Li,j. ———~ 103

j = j+1 ← oui — j < n ?

non

Réaliser une étude
asymptotique du système. ———~ 110

FIN — Système instable, pas
de prévision possible ← non — Est-on en présence
d'une convergence
asymptotique des
trajectoires ? oui ———~ 111

105

Il existe un attracteur.

Calculer la dimension fractale
Dk de l'attracteur. ← non — Tous les coefficients de
Lyapunov Li,j sont-ils
négatifs ? ———~ 104

Dk compris
dans une
fourchette ? oui → L'attracteur est unique. oui

non

Impossible d'identifier
une solution optimale

On peut identifier une solution optimale.

Calculer les coefficients de Hurst
pour identifier les tendances.

FIN

FIN

Figure 1

**EP 2 261 817 A1**

Europäisches Patentamt
European Patent Office
Office européen des brevets

**RAPPORT DE RECHERCHE EUROPEENNE**

Numéro de la demande

EP 09 29 0431

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| A | Lines M: "User's Guide iDMC interactive Dynamical Model Calculator"<br><br>8 juillet 2007 (2007-07-08), XP002580027<br>Extrait de l'Internet:<br>URL:http://web.archive.org/web/20070708202755/www.dss.uniud.it/nonlinear/guide.pdf><br>[extrait le 2010-04-28]<br>* sections 2, 4, 5, 7, 10 *<br>----- | 1-6 | INV.<br>G06F17/13 |
| A | Lines M: "Nonlinear Dynamics: Computer Exercises"<br><br>8 juillet 2007 (2007-07-08), XP002580028<br>Extrait de l'Internet:<br>URL:http://web.archive.org/web/20070708165748/www.dss.uniud.it/nonlinear/idmcex.pdf><br>[extrait le 2010-04-28]<br>* page 3 - page 6 *<br>----- | 1-6 | |
| L | "iDMC interactive Dynamical Model Calculator"<br>Page web du projet iDMC<br><br>9 juillet 2007 (2007-07-09), XP002580029<br>Extrait de l'Internet:<br>URL:http://web.archive.org/web/20070709164316/http://code.google.com/p/idmc/><br>[extrait le 2010-04-28]<br>* le document en entier *<br>----- | | DOMAINES TECHNIQUES RECHERCHES (IPC)<br><br>G06F |
| A,D | Nuadi R: "Étude d'un système d'équations aux dérivées partielles non linéaires de type Bénard avec contraintes"<br>1999, Thèse de doctorat, École Doctorale de Mathématiques et Informatique, Université de Bordeaux I , Bordeaux, France , XP002580030 , pages 3-9<br>* introduction *<br>----- | 1-6 | |

Le présent rapport a été établi pour toutes les revendications

| Lieu de la recherche | Date d'achèvement de la recherche | Examinateur |
|---|---|---|
| Berlin | 28 avril 2010 | Domingo Vecchioni, M |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons
 
& : membre de la même famille, document correspondant

EPO FORM 1503 03.82 (P04C02)